# EUROPEAN PATENT SPECIFICATION

(11) **EP 1 484 982 B1**
(45) Date of publication and mention of the grant of the patent: **11.04.2007**
(21) Application number: 03742479.3
(22) Date of filing: 20.02.2003
(51) Int. Cl.: A23B 7/154, A23B 7/12, A23B 9/26

(54) **HYDROLYSED CHITOSAN AS ANTIMICROBIAL COUMPOUND AND USES THEREOF**
HYDROLYSIERTES CHITOSAN ALS ANTIMIKROBIELLE VERBINDUNG UND IHRE VERWENDUNGEN
CHITOSANE HYDROLYSE UTILE EN TANT QUE COMPOSE ANTIMICROBIEN ET UTILISATIONS DE CE DERNIER

(30) Priority: 21.02.2002 US 357836 P
(43) Date of publication of application: 15.12.2004
(73) Proprietor: Caldwell Bio Fermentation Canada Inc., Martinville, Québec J0B 2A0 (CA); Sa Majesté la Reine du Chef du Canada, Saint-Hyacinthe, Québec J2S 8E3 (CA); ISM Biopolymer Inc., Granby, Québec J2h 2R6 (CA)
(72) Inventor: SAVARD, Tony, La Présentation, Québec J0H 1B0 (CA); BOUCHER, Isabelle, Sherbrooke, Québec J1G 2K4 (CA); CHAMPAGNE, Claude, P., Sainte-Madeleine, Québec J0H 1S0 (CA)
(74) Representative: Modiano, Micaela Nadia
(86) International application number: PCT/CA2003/000241
(87) International publication number: WO 2003/070008

(56) References cited:
- EP-A- 1 252 827
- WO-A-01/19187
- WO-A-01/87067
- WO-A-99/40790
- WO-A-03/009694
- US-A- 5 273 749
- US-A- 5 374 627
- US-A- 5 633 025
- US-A- 5 726 123
- US-A- 6 060 429
- PATENT ABSTRACTS OF JAPAN vol. 014, no. 131 (C-0700), 13 March 1990 (1990-03-13) & JP 02 005822 A (FUSO KAGAKU KOGYO KK), 10 January 1990 (1990-01-10)
- PATENT ABSTRACTS OF JAPAN vol. 013, no. 516 (C-656), 17 November 1989 (1989-11-17) & JP 01 211529 A (TOMOJI TANAKA), 24 August 1989 (1989-08-24)
- PATENT ABSTRACTS OF JAPAN vol. 018, no. 421 (C-1234), 8 August 1994 (1994-08-08) & JP 06 125704 A (TORIGOE SEIFUN KK), 10 May 1994 (1994-05-10)
- GHAOUTH EL A ET AL: "ANTIFUNGAL ACTIVITY OF CHITOSAN ON POST-HARVEST PATHOGENS: INDUCTION OF MORPHOLOGICAL AND CYTOLOGICAL ALTERATIONS IN RHIZOPUS STOLONIFER" , MYCOLOGICAL RESEARCH, CAMBRIDGE, GB, VOL. 96, NR. 9, PAGE(S) 769-779 XP002050443 the whole document

## Description

### TECHNICAL FIELD

This invention relates to antimicrobial compounds and their method of use, particularly in inhibiting growth of propagation of spoilage or pathogen microorganisms in food products.

### BACKGROUND OF THE INVENTION

It is known since a certain period of time that the use of antimicrobial agents to prevent or retard the growth of bacteria finds applicability in a wide variety of applications in food, medical and personal care fields. Some of these applications involve combining an antimicrobial agent with a solid surface. In such cases, it can be necessary to apply an antimicrobial agent to the surface while maintaining the antimicrobial activity of the antimicrobial agent Unfortunately, in so doing the antimicrobial activity of the antimicrobial agent can be reduced in the process, rendering the resulting material, including food products, insufficiently effective.

In many ways, it would be preferable that the antimicrobial products should not only protect the product until its packaging is first opened by the consumer, but also that the it should prevent or reduce the growth of contaminating microorganisms introduced to the product when used by the consumer. A typical goal is that products with preservative agents should self sterilize within 24 hours of contamination resulting from normal conditions of use. It is known also that products containing low concentration of alcohol, and having a pH range between about 3 and about 11, are particularly prone to microbial spoilage.

Patent Abstracts of Japan, vol. 018, n° 421 (C-1234), 8 August 1994 & JP 06 125704 discloses a flavouring liquid for use in vegetable storage houses comprising edible vinegar compounded with ethanol and chitosan and optionally PH-adjuster.

It would be highly desirable to be provided with a new composition that exhibits high antimicrobial activity and being safe for human consumption. Such composition could be useful for different food products.

### SUMMARY OF THE INVENTION

One object of the present invention is to provide a method for inhibiting growth of spoilage or pathogen microorganisms in vegetables comprising treating said vegetables with a composition comprising hydrolysate chitosan-acid complex, said chitosan-acid complex consisting of an oligomer of chitosan complexed to an acid or an acid radical.

The chitosan-acid complex may have a molecular weight between about 0. 5Kda to 1.2 Mda.

The vegetables may be processed vegetables, such as for example fermented or vegetables transformed into paste or liquid solution.

Also, the chitosan-acid complex may be added to the processed vegetables before, during or after processing of it.

The microorganisms that can be inhibited or eliminated with the method of the invention are yeasts, mold, or bacteria, that can be lactic acid bacteria or fermentation yeasts.

The composition of the invention that is also used for the method invention may be a liquid, preferably aqueous, solution.

Another object of the invention is the use of chitosan-acid complex that can be selected from the group consisting of a chitosan-lactate, a chitosan-acetate, a chitosan-chlorate, a chitosan-proprionate, and chitosan complexed to an acid radical having between 3 to 30 carbon atoms.

The microorganisms that can be targeted with the composition and methode of the invention can be selected from the group consisting of, *Pichia, Hansenula, Kluyveromyces, Willipsis,* and *Kluyveromuyces, Leuconostoc, Lactobacillus, Streptococcus, Saccharomyces, Candida, Cryptococcus, Rhodotorula, Shizosaccharomyces, Torulopsis, E. coli, E. coli* O157:H7, *Salmonella, Staphylococcus, Clostridium,* and *Bacillus.*

Another object of the present invention is to provide a composition for inhibiting growth of spoilage or pathogen microorganisms in vegetables comprising chitosan-acid complex which can be hydrolyzed.

For the purpose of the present invention the following terms are defined below.

As used herein, the term "fermentation" means lactic acid fermentation, that is, the anaerobic, enzymatic decomposition of carbohydrates to form considerable amounts of lactic acid and/or other organic acids. In one embodiment of the present invention, the fermentation microorganism can be bacteria as well as yeast or a mold.

By "growth inhibition" it is meant that the numbers or cell count of the food spoilage organisms or pathogens is decreased or does not increase.

### BRIEF DESCRIPTION OF THE DRAWINGS

Fig. 1 illustrates inhibitory diameters of hydrolysates and native chitosan-lactate at different concentrations on MBA agar for *Saccharomyces bayanus* Y-43 (A) and *Saccharomyces unisporus* Y-42 (B);
Fig. 2 illustrates inhibitory diameters of hydrolysates and native chitosan-lactate at different concentrations on MBA agar for *Lactobacillus plantarum* NK312 (A), *Pediococcus acidilactici* AFERM 772 (B), and *Leuconostoc mesenteroides* BLAC (C);
Fig. 3 illustrates growth curves by optical density (600 nm) for *Saccharomyces bayanus* Y-43 in acidified VJM;
Fig. 4 illustrates growth curves by optical density (600 nm) for *Saccharomyces unisporus* Y-42 in acidified VJM;
Fig. 5 illustrates transmission electron micrographs of *Saccharomyces unisporus* Y-42 (A) after different treatments;
Fig. 6 illustrates transmission electron micrographs of *Saccharomyces unisporus* Y-42 showing the "heaps" of needle" arrangement of chitosan hydrolysates (A) at particular sites on the cell wall (B); and
Fig. 7 illustrates transmission electron micrographs of *Saccharomyces bayanus* Y-43 after different treatments.

### DETAILED DESCRIPTION OF THE PREFERRED EMBODIMENT

The present invention now will be described more fully hereinafter with reference to the accompanying drawings, in which preferred embodiments of the invention are shown. This invention, may, however, be embodied in many different forms and should not be construed as limited to the embodiments set forth herein; rather, these embodiments are provided so that this disclosure will be thorough and complete, and will fully convey the scope of the invention to those skilled in the art.

In accordance with the present invention, there is provided hydrolyzed chitosan-lactate that is a molecule showing efficacy for use as a preservative in acidic foods such as fermented vegetables. Antimicrobial activities of chitosan-lactate are greatly modulated by the degree of hydrolysis, the target organisms and the composition of the media.

Another embodiment of the present invention is to provide a method of preserving foods, processed or not, which is broadly effective to prevent foods from deterioration and from denaturation caused by microorganisms, including yeast and/or bacteria, even in the use of small amount of antimicrobial agents. Preferably, the food products targeted for applying the method invention concern fresh fruits or vegetables, processed fruits or processed vegetables.

The present invention relates to a method of preserving foods which comprises adding at least one kind of a natural antimicrobial agent hydrolyzed chitosan-lactate to foods, and storing or processing the food. Hydrolyzed chitosan-lactate can be added to a food product before, during or after processing, such as fermentation, of the food products.

Particularly interesting food products that can be preserved with the method and composition of the present invention are vegetables. The vegetables can be treated with a composition containing hydrolyzed chitosan-lactate as whole, or after processing, or even after having been transformed into pastes or juices.

The present invention will be more readily understood by referring to the following examples.

### EXAMPLE I

### Antimicrobial action of hydrolyzed chitosan against spoilage yeast and lactic acid bacteria of fermented vegetables

### Materials and Methods

### Soluble chitosan

Hydrolysates and native chitosan-lactate were obtained from ISM Biopolymer Inc. (Sherbrooke, Canada). This 40-g/l chitosan preparation contained 2.5% of food grade DL lactic acid (88%) and had a deacetylation level of 90% (manufacturer's data) (pH 5.5). Native and hydrolyzed chitosan-lactate of different molecular weights were tested in chitosan concentration of 0.5, 1, 2, 5 and 10 g/l. The mean molecular weights of the molecules and degree of polymerization (DP) are presented in Table 1. All samples were sterilized by filtration through 0.22 µm nitrocellulose membranes (Millipore, Milford, Mass., U.S.A.).

### Microbial strains

Microbial strains used in this study included three species of lactic acid bacteria (LAB) used as sauerkraut starter (BLAC 1^{™}, Caldwell BioFermentation Canada Inc, Compton, Canada) and two spoilage yeasts.

LAB were *Lactobacillus plantarum* NK 312 (Lallemand, St-Simon, France), *Pediococcus acidilactici* AFERM 772 (Quest, Lachine, Canada) and *Leuconostoc mesenteroides* BLAC (CRDA, St-Hyacinthe, Canada). Yeast strains were isolated with method known in the art, from spoiled fermented vegetables and identified as *Saccharomyces unisporus* Y-42 and *Saccharomyces bayanus* Y-43. LAB strains were maintained on MRS agar (BDH, Montréal, Canada) at pH 5.6 and yeast strains on YM agar (BDH, Montréal, Canada) at pH 3.5 acidified with 5N HCl.

### Antimicrobial activity against LAB and spoilage yeasts in agar-based media

The antimicrobial activity was first examined on Methylene Blue Agar (MBA) as described by *Walker et al.* (FEMS Microbiol. Lett., **127**:213-222). MBA was distributed in aliquots of 15 ml then autoclaved at 121°C for 15 min and cooled to 45°C before addition of LAB or yeasts at a final cell number of 1 x 10⁵ per Petri dish. Target cells were seeded into the molten MBA, mixed gently and then poured in Petri dishes. Five mm diameter punctures were made with a stainless steel punch in the solidified agar in order to obtain wells.

Sterile native and hydrolyzed chitosan solutions (50 µl) at concentrations of 0.5, 1, 2, 5 and 10 g/l were distributed into 5-mm diameter wells. Lactate (2.5%) was used as a negative control. In MBA, test organisms grew as a background lawn and inhibitory activity was evidenced by a clear zone surrounding the well, which could itself be surrounded by blue-stained line (dead) colonies if fungicidal or bactericidal activity was present. Plates were incubated at 30°C for 72 h and kept at 4°C for two weeks. Three independent assays were performed in duplicate and diameter of inhibition (clear) zones delimited by the blue line was measured in millimeters.

### Antimicrobial activity against LAB and spoilage yeasts in liquid media

Data obtained with agar-based media were compared to those obtained on vegetable juice media (VJM) liquid media by automated spectrophotometer (AS) using a Bioscreen^{™} apparatus (Labsystems, Helsinki, Finland). The VJM was composed of 61% carrot juice, 12% cabbage juice, 3% onion juice and 24% brine containing 20 g/l sea salt and was prepared according to Gardner et al. (Int. J. Food Microbiol., **66**:261-275). The initial pH of the blend was 6.34. To determine the inhibitory potential of chitosan in fermented vegetables, VJM was acidified at pH 3.8 with lactic acid 85%. VJM was supplemented with hydrolyzed chitosan-lactate at 0.5,1, 2, 5 or 10 g/l and distributed in a 200-well microplate. Wells were inoculated with test strains in triplicate at 0.1% (vol/vol) of 72 h yeast preculture (YM broth, 30°C for 72 h). For each sample, control conditions without chitosan were made in triplicate and blanks with chitosan without yeasts were subtracted from the mean value obtained for the test wells. Experiments were conducted on three independent assays in triplicate. Incubation of the microplates was carried out at 26°C for 28 h and the optical density (OD) at 600 nm was measured every 15 min. The Bioscreen ^{™} unit is designed to shake the microplates and set intervals and, in this study, the microplates were shaken for 20 s prior to and after OD readings.

### Electron microscopy

Samples were examined after four treatments at two pH values (3.8 and 6.0) in order to evaluate the effect of chitosan in function of pH. *Saccharomyces unisporus* Y-42 and *Sc. bayanus* Y-43 were pre-incubated at 30°C for 48 h in YM broth (control). Intermediate hydrolyzed chitosan (DP25) was added at a concentration of 2 g/l and samples were taken after 1 h or 5 h of incubation (first and second treatments). Chitosanase (ISM Biopolymer Inc. Sherbrooke, Canada) was mixed with chitosan-lactate DP25 in the third treatment to confirm the nature of the aggregate and all of them were compared to control without chitosan and chitosanase (control treatment).

After incubation, samples were centrifuged at 4000-x g for 15 min at 4°C and yeast cells embedded in 4% softened agar (Bacteriological Agar, Difco Laboratories, Detroit, Mich. U.S.A.) (pH 6.0 or 3.8, 45°C). The remaining gel was cut in small pieces of about 1 mm³. Samples were then fixed in 2% glutaraldehyde/cacodylate buffer 0.1 M pH 7.3 for 2.5 h at room temperature, rinsed several times in the same buffer for a total of 1.5 h and postfixed overnight in 2% osmium tetroxide/water at 4°C. Afterwards samples were rinsed three times within 1.5 h, dehydrated in a graded ethanol series (30, 50, 70 and 100%), infiltrated with Spurr resin and polymerized for 24 h at 60°C. Thin sections were obtained, stained with uracyl acetate and lead citrate and observed on a transmission electron microscope at 80 kV (Philips model 420, Eindhoven, The Netherlands).

### Results

### Antimicrobial activity of chitosan-lactate in agar-based media

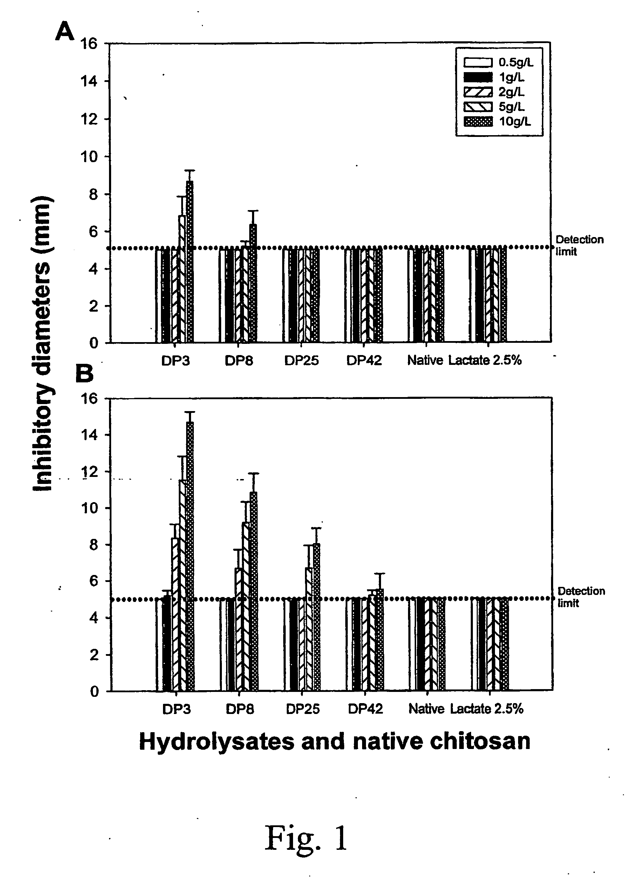

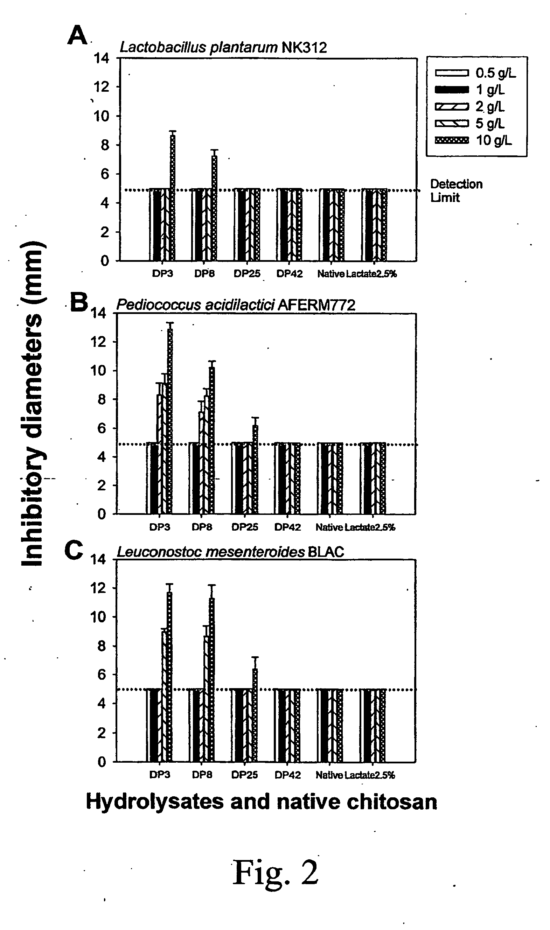

The antimicrobial activities of native and hydrolyzed chitosan-lactate were first assessed on MBA agar. Figs. 1 and 2 illustrate the level of inhibition for *Sc. bayanus* Y-43 (Fig. 1-A), *Sc. unisporus* Y-42 (Fig. 1-B) and for lactic acid bacteria (Fig. 2). The highly degraded chitosan (DP3) showed the greatest inhibitory activity with all microorganisms. Inhibition decreased with increasing molecular weight. Trimers (DP3) were the most potent inhibitor, followed by octamers (DP8). Intermediate molecular weight chitosans (DP25 and DP42) showed little activity and no growth inhibition could be observed with polymers of up to 10 kDa. However, inhibitory activities of the different oligomers were a function of the concentration and the target organism. No growth inhibition was observed with concentrations of 0.5, 1 and 2 g/l for *Sc. bayanus* Y-43, which needed a minimum of 5 g/l to show inhibition (Fig. 1-A). For *Sc. unisporus* Y-42, a similar inhibitory pattern was observed even though this strain was more sensitive to chitosan hydrolysates (P<0.002, t-test). Inhibition was also observed on lactic acid bacteria with a minimal inhibitory concentration of 2 g/l and *Lactobacillus plantarum* was the most resistant of the three strains (Fig. 2). Control conditions with only lactic acid at 2.5% did not shown inhibitory activities.

Based on these results, inhibitory activity of chitosan-lactate was higher with low and intermediate molecular weight hydrolysates and was directly proportional to the concentration added to MBA. Inhibitory activity is lost with hydrolysates between DP8 and DP42 depending on the target organism. These data are consistent with the fact that low molecular weight chitosan was more inhibitory than intermediate and higher molecular weight chitosan in agar systems, although the molecular weight was not specified. Therefore, the fact that lactic acid bacteria were also affected by chitosan implies that chitosan-lactate should not be added at the beginning of vegetable fermentation. However, the MBA agar test was carried out at pH 4.5 and it remains to be determined if a similar inhibition pattern would occur at the higher pH levels encountered at the beginning of vegetable fermentation

### Antimicrobial activity of chitosan-lactate in VJM media

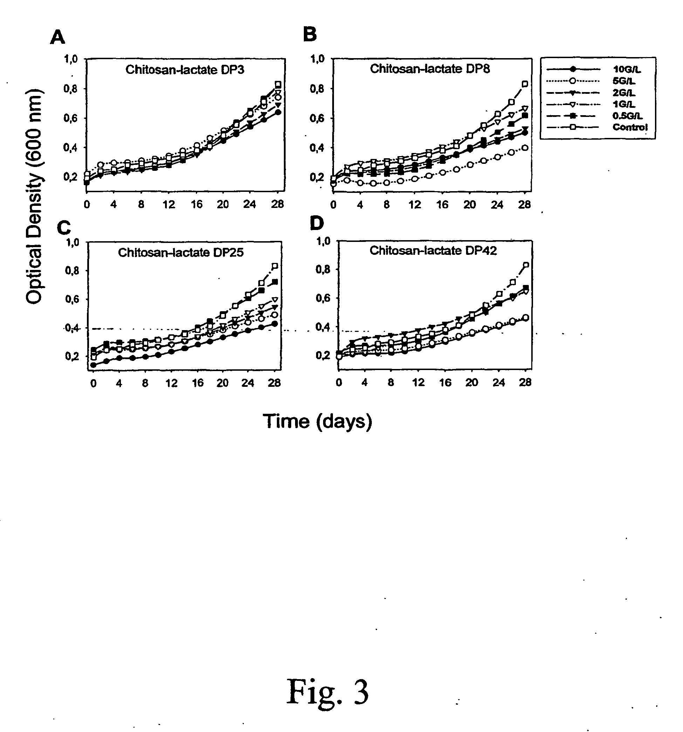

The antimicrobial activities of native and hydrolyzed chitosan-lactate in liquid medium were assessed only on yeast strains, since, at the pH of 3.8 used with VJM, growth of the lactic acid bacteria was critically inhibited and no increase in OD values could be obtained during the recording time (28 h) (data not shown). VJM was used as a complex medium representative of conditions encountered following a lactic fermentation. Fig. 3 shows the growth curves of *Sc. bayanus* Y-43 in presence of DP3 (A), DP8 (B), DP25 (C) and DP42 (D) at different concentrations. In contrast to data obtained in agar-based media, all hydrolysates were inhibitory and hydrolysates of intermediate molecular weight became the most potent inhibitors. With *Sc. bayanus* Y-43, all concentrations tested were effective against this yeast but complete growth inhibition was not obtained in this medium with concentrations as high as 10 g/l. Nevertheless, the inhibition was concentration dependent.

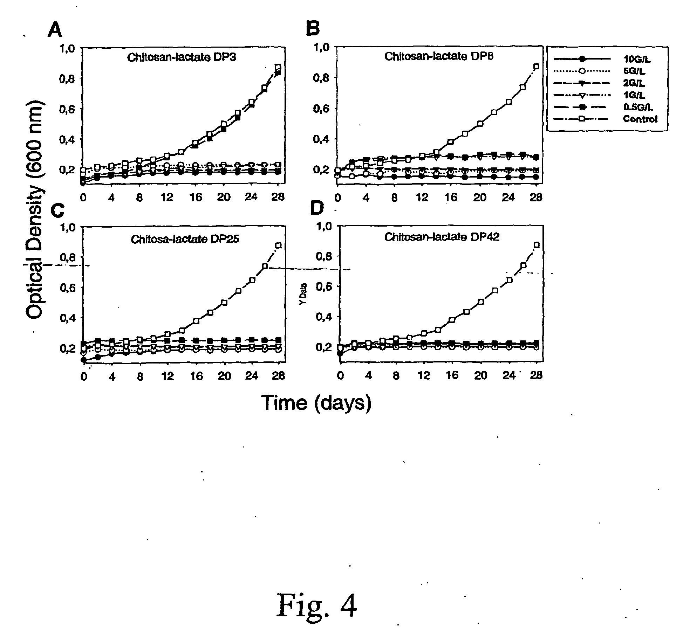

As shown in Fig. 4, *Saccharomyces unisporus* Y-42 (the most sensitive strain in agar-based media) showed complete growth inhibition at 0.5 g/l except for the trimer (DP3), which did not reduce the growth of this yeast as compared to the control. Interestingly, it has been observed before that *Sc. unisporus* is more resistant to low pH and acid than *Sc. bayanus.* This resistance is generally conferred by more effective proton pumping at the cell wall and a more acidic internal cytoplasmic pH. These characteristics are linked with anionic charges on the cell wall and could explain the high sensitivity to the polycationic charge of chitosan-lactate.

The inhibition pattern in liquid medium (VJM) differed from those obtained in solid media (MBA). Hydrolysates of low molecular weight chitosan-lactate were less toxic than hydrolysates of intermediate molecular weight. This confirms that the media composition and the degree of hydrolysis influenced the inhibitory activity of hydrolysates.

The discrepancies observed between liquid and solid media can be explained by the fact that particulate nature of solid media restricted mass transfer of the relatively large, polymeric chitosan molecules, which reduced the chance of contact with a microbial cell in the agar. Another possibility is a dilution factor related to the number of molecules in a static medium. Chitosan stock solutions are prepared with 40 g/l and chitosan is then degraded with chitosanase. For the same initial number of molecules, the most hydrolyzed chitosan showed a higher relative number of molecules than the native one.

### Scanning electronic microscopy

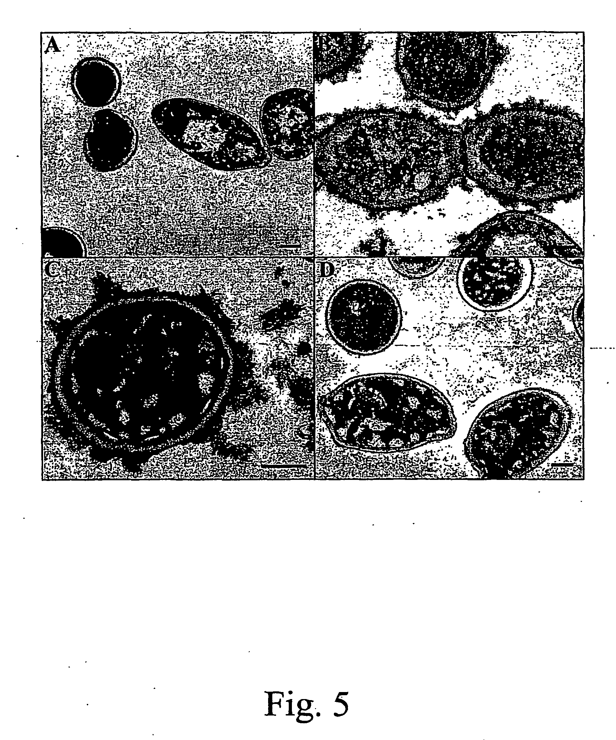

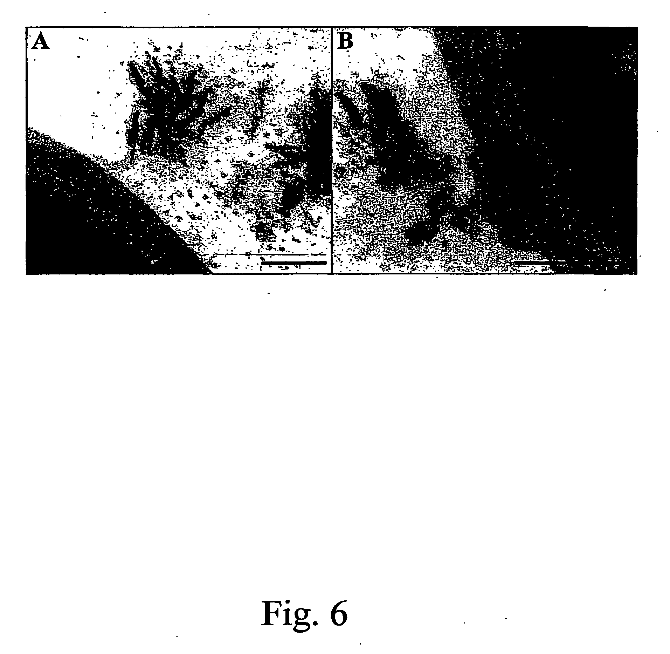

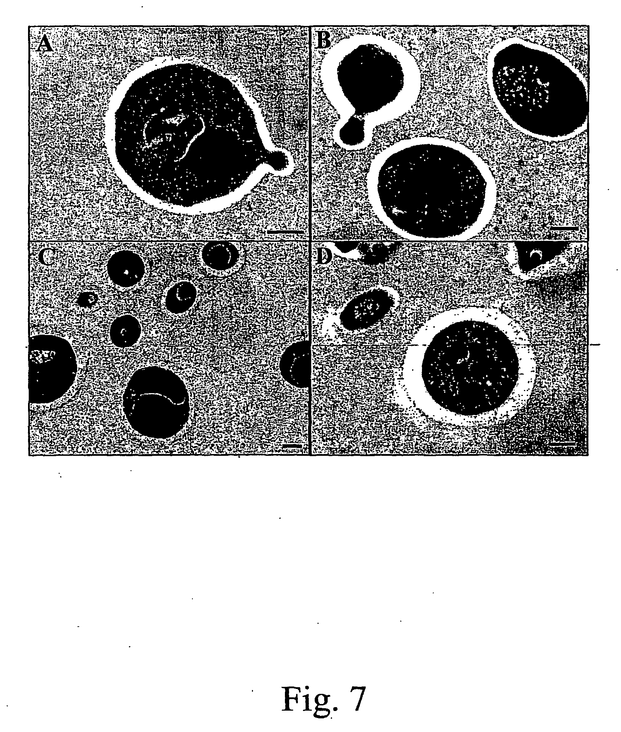

Figs. 5 and 6 show transmission electron micrographs of *Sc. unisporus* Y-42. Treatments with chitosan-lactate were examined in YM at pH 3.8 and 6.0 but no differences could be observed between either values, probably because these pH were below the pKa of chitosan (6.34). For this reason, only micrographs of YM at pH 3.8 were presented. For *Sc. unisporus* Y-42, a thick sheath of refractive substances could be observed around the cell wall after 1 h exposure to chitosan-lactate DP25 (Fig. 5-B) and the thickness of the layer increased with the term of exposure to chitosan-lactate (Fig. 5-C). The adsorption pattern was irregular but often covered the entire cell wall surface. The material had the appearance of a "heap of needles" as shown in Fig. 6-A. The placement of these heaps seemed to be linked at some specific sites of the cell wall (Fig. 6-B). These refractive substances could be hydrolyzed by chitosanase. Furthermore, *Sc. bayanus* Y-43, the less sensitive strain to chitosan hydrolysates VJM broth (Fig. 3), did not show this coating (Fig. 7).

The results obtained with *Sc. unisporus* Y-42 reveal an irregular coating and support the phenomenon of "cell suffocation". This is based on the ability of the reactive amino groups in chitosan to interact with a multitude of anionic groups on the yeast cell surface, thereby forming an impervious layer around the cell, and causing a loss of active transport and a modification of membrane permeability which could become irreversible after a certain point. Therefore, this phenomenon does not exclude the possibility that chitosan causes a more direct disturbance of the membrane function by the leakage of proteinaceous and UV-absorbing-materials.

The fact that no coating could be observed on *Sc. bayanus* Y-43, which also demonstrated a chitosan-lactate sensitivity in both solid and liquid media suggests that the chitosan could have multiple mechanisms of action at the same time that do not necessarily implicate the cell wall or the membrane. It is reported that chitosan could bind a range of heavy metals and trace elements and suggested that the antimicrobial activity of chitosan was principally linked to chelating properties conferred by the polycationic nature of chitosan. This hypothesis could apply to our results but further investigation is needed to verify if this is also the case for *Sc. bayanus* Y-43. Our results suggest therefore a multiple mechanism of action of chitosan.

**Table 1**

| **Chemical properties of Chitosan** | |
|---|---|
| Native chitosan | 1.2 MDa |
| DP101* | 10 kDa |
| DP42 | 7 kDa |
| DP25 | 4 kDa |
| DP8 | 1.3 kDa |
| DP3 | 0.5 kDa |

| | |
|---|---|
| *Degree of polymerization (DP) and molecular weight were obtained from the manufacturer. Hydrolysates of chitosan were obtained by enzymatic hydrolysis with chitosanase of *Streptomyces sp.* | |

## Claims

1. A method for inhibiting growth of spoilage or pathogen microorganisms in food products, said method comprising treating said food products with a composition comprising hydrolysate chitosan-acid complex, said chitosan-acid complex consisting of an oligomer of chitosan complexed to an acid or an acid radical.

2. The method of claim 1, wherein said food products are fresh fruits or vegetables.

3. The method of claim 1, wherein said food products are processed or non processed food products.

4. The method of claim 1, wherein said chitosan-acid complex has a molecular weight between about0. 5Kda to 1.2 Mda.

5. The method of claim 2, wherein said vegetables are processed vegetables.

6. The method of claim 5, wherein said vegetables are fermented vegetables or vegetables transformed into paste, juice or liquid solution.

7. The method of claim 5, wherein said hydrolysate chitosan-acid complex is added to said processed vegetables before, during or after processing of said vegetables.

8. The method of claim 5, wherein said processed vegetables are fermented with yeasts or bacteria

9. The method of claim 8, wherein said bacteria are lactic acid bacteria.

10. The method of claim 8, wherein said yeasts are fermentation yeasts.

11. The method of claim 1, wherein said composition is an aqueous solution.

12. The method of claim 1, wherein said chitosan-acid complex is selected from the group consisting of a chitosan-lactate, a chitosan-acetate, a chitosan- chlorate, a chitosan-proprionate, and chitosan complexed to an acid radical having between 3 to 30 carbon atoms.

13. The method of claim 1, wherein said microorganism is selected from the group consisting of, Pichia, Hansenula, Kluyveromyces, Willipsis, Kluyveromuyces, Leuconostoc, Lactobacillus, Streptococcus, Saccharomyces, Candida, Cryptococcus, Rhodotorula, Shizosaccharomyces, Torulopsis, E. coli, E. coli 0157:H7, Salmonella, Staphylococcus, Clostridium, and Bacillus.

14. The method of claim 1, wherein said acid is selected from the group consisting of lactic acid and acetic acid.

## Patentansprüche

1. Ein Verfahren zur Unterdrückung des Wachstums von Verderb auslösenden oder pathogenen Mikroorganismen in Lebensmittel-erzeugnissen, wobei das Verfahren eine Behandlung der Lebensmittel-erzeugnisse mit einer Zusammensetzung umfasst, die ein Hydrolysat eines Chitosan-Säure-Komplexes umfasst, wobei der Chitosan-Säure-Komplex aus einem Oligomer des Chitosans besteht, das mit einer Säure oder einem Säureradikal komplexiert ist.

2. Das Verfahren gemäß Anspruch 1, wobei die Lebensmittel-erzeugnisse frisches Obst oder Gemüse sind.

3. Das Verfahren gemäß Anspruch 1, wobei die Lebensmittel-erzeugnisse verarbeitete oder unverarbeitete Lebensmittelerzeugnisse sind.

4. Das Verfahren gemäß Anspruch 1, wobei der Chitosan-Säure-Komplex eine Molmasse zwischen etwa 0,5 Kda bis 1,2 Mda aufweist.

5. Das Verfahren gemäß Anspruch 2, wobei das Gemüse verarbeitetes Gemüse ist.

6. Das Verfahren gemäß Anspruch 5, wobei das Gemüse fermentiertes Gemüse oder Gemüse ist, das zur Paste, zum Saft oder zur flüssigen Lösung umgewandelt wurde.

7. Das Verfahren gemäß Anspruch 5, wobei das Hydrolysat eines Chitosan-Säure-Komplexes dem verarbeiteten Gemüse vor, während oder nach einer Verarbeitung von dem Gemüse zugegeben wird.

8. Das Verfahren gemäß Anspruch 5, wobei das verarbeitete Gemüse mit Hefen oder Bakterien fermentiert wird.

9. Das Verfahren gemäß Anspruch 8, wobei die Bakterien Milchsäure-Bakterien sind.

10. Das Verfahren gemäß Anspruch 8, wobei die Hefen Gärhefen sind.

11. Das Verfahren gemäß Anspruch 1, wobei die Zusammensetzung eine wässrige Lösung ist.

12. Das Verfahren gemäß Anspruch 1, wobei der Chitosan-Säure-Komplex aus der Gruppe ausgewählt ist, die aus einem Chitosan-Lactat, einem Chitosan-Acetat, einem Chitosan-Chlorat, einem Chitosan-Proprionat und Chitosan besteht, das mit einem Säureradikal komplexiert ist, welches zwischen 3 bis 30 Kohlenstoffatome aufweist.

13. Das Verfahren gemäß Anspruch 1, wobei der Mikroorganismus aus der Gruppe ausgewählt ist, die aus Pichia, Hansenula, Kluyveromyces, Willipsis, Kluyveromuyces, Leuconostoc, Lactobacillus, Streptococcus, Saccharomyces, Candida, Cryptococcus, Rhodotorula, Shizosaccharomyces, Torulopsis, E. coli, E. coli 0157:H7, Salmonella, Staphylococcus, Clostridium und Bacillus besteht.

14. Das Verfahren gemäß Anspruch 1, wobei die Säure aus der Gruppe ausgewählt ist, die aus Milchsäure und Essigsäure besteht.

## Revendications

1. Un procédé pour empêcher la croissance de souillures ou de microorganismes pathogènes dans des produits alimentaires, ledit procédé comprenant le traitement desdits produits alimentaires avec une composition comprenant un complexe chitosane hydrolysé-acide, ledit complexe chitosane hydrolysé-acide étant composé d'un oligomère de chitosane, complexé avec un acide ou un radical acide.

2. Le procédé selon la revendication 1, dans lequel lesdits produits alimentaires sont des fruits ou des légumes frais.

3. Le procédé selon la revendication 1, dans lequel lesdits produits alimentaires sont des produits alimentaires traités ou non traités.

4. Le procédé selon la revendication 1, dans lequel ledit complexe chitosane-acide présente un poids moléculaire compris entre environ 0,5 Kda et 1,2 Mda.

5. Le procédé selon la revendication 2, dans lequel lesdits légumes sont des légumes traités.

6. Le procédé selon la revendication 5, dans lequel lesdits légumes sont des légumes fermentés ou des légumes transformés en pâte, en jus ou en solution liquide.

7. Le procédé selon la revendication 5, dans lequel ledit complexe chitosane hydrolysé-acide est ajouté auxdits légumes traités avant, durant, ou après le traitement desdits légumes.

8. Le procédé selon la revendication 5, dans lequel lesdits légumes traités sont fermentés avec des levures ou des bactéries.

9. Le procédé selon la revendication 8, dans lequel lesdites bactéries sont des bactéries d'acide lactique.

10. Le procédé selon la revendication 8, dans lequel lesdites levures sont des levures de fermentation.

11. Le procédé selon la revendication 1, dans lequel ladite composition est une solution aqueuse.

12. Le procédé selon la revendication 1, dans lequel ledit complexe chitosane-acide est sélectionné dans le groupe composé de : chitosane-lactate, chitosan-acétate, chitosane-chlorate, chitosane-proprionate, et chitosane complexé sur un radial acide ayant entre 3 et 30 atomes de carbone.

13. Le procédé selon la revendication 1, dans lequel le microorganisme est sélectionné dans le groupe composé de : Pichia, Hansenula, Kluyveromyces, Willipsis, Kluyveromuyces, Leuconostoc, Lactobacillus, Streptococcus, Saccharomyces, Candida, Cryptococcus, Rhodotorula, Shizosaccharomyces, Torulopsis, E. coli, E. coli 0157:H7, Salmonella, Staphylococcus, Clostridium, et Bacillus.

14. Le procédé selon la revendication 1, dans lequel ledit acide est sélectionné dans le groupe composé de l'acide lactique et de l'acide acétique.
